# EUROPEAN PATENT SPECIFICATION

(11) **EP 3 110 116 B1**
(45) Date of publication and mention of the grant of the patent: **25.09.2019**
(21) Application number: 14888498.4
(22) Date of filing: 04.04.2014
(51) Int. Cl.: H04M 1/725, H04M 1/60, G10L 15/00, G10L 15/22, G10L 15/08

(54) **METHOD FOR AUTOMATICALLY ADJUSTING VOLUME, VOLUME ADJUSTMENT APPARATUS AND ELECTRONIC DEVICE**
VERFAHREN ZUR AUTOMATISCHEN LAUTSTÄRKENANPASSUNG, LAUTSTÄRKENANPASSUNGSVORRICHTUNG UND ELEKTRONISCHE VORRICHTUNG
PROCÉDÉ DE RÉGLAGE AUTOMATIQUE DU VOLUME, APPAREIL DE RÉGLAGE DU VOLUME ET DISPOSITIF ÉLECTRONIQUE

(43) Date of publication of application: 28.12.2016
(73) Proprietor: Huawei Device Co., Ltd., Dongguan, Guangdong 523808 (CN)
(72) Inventor: CHEN, Yong, Shenzhen City Guangdong 518129 (CN); SUN, Zengcai, Shenzhen City Guangdong 518129 (CN)
(74) Representative: Körber, Martin Hans
(86) International application number: PCT/CN2014/074821
(87) International publication number: WO 2015/149359

(56) References cited:
- WO-A1-2013/134929
- CN-A- 1 952 541
- CN-A- 102 915 753
- CN-A- 103 200 329
- CN-A- 103 369 112
- CN-A- 103 685 757
- CN-U- 202 889 458
- JP-A- 2004 013 084
- US-A1- 2013 090 923
- US-B1- 7 136 668

## Description

### TECHNICAL FIELD

The present invention relates to the field of electronic devices, and in particular, to an automatic volume adjustment method, a volume adjustment apparatus, and an electronic device.

### BACKGROUND

With social development, electronic devices such as a mobile phone and a tablet computer become increasingly popular, and almost everyone has an electronic device in hand.

In a process of making a call by using an electronic device, it is possible that sometimes a call party feels unsatisfactory with call volume due to an environmental or human factor. Generally, in a call process, if a call party feels not very satisfactory with current call volume, the call party usually adjusts output volume of an electronic device in a manual manner, so that the call volume meets a requirement of the call party.

However, such an adjustment manner is usually complex, and it is possible that the current call may be interfered.

US 7136668 B1 discloses a method for adjusting the volume level of communication voice and key tones in a cellular phone, which comprises the steps of: two voice commands being registered by the user and raising or lowering the relevant volume level in response to the first or the second voice command, respectively.

US 2014/0310004 A1 provides a voice control method, a mobile terminal device and a voice control system, wherein an application provides at least one operating parameter for a speech software development module. The invention can allow the user of a mobile terminal device to control the application through voice.

Further related art is disclosed in EP 2725819 A1, JP 2004 013084 A, WO 2013/134929 A1, and US 2013/0090923 A1.

### SUMMARY

The present invention mainly resolves a technical problem of how to automatically, quickly, and conveniently adjust volume according to an actual situation, so as to improve call experience of a user.

In view of this, the present invention proposes an automatic volume adjustment method according to claim 1 and an electronic device according to claim 3, with which volume can be automatically adjusted according to a semantic of a call party, thereby improving call experience of a user.

According to a first aspect, an embodiment of the present invention provides an automatic volume adjustment method, where the method includes: receiving, by a first electronic device, a voice signal after a call connection is established; performing identification on the voice signal and performing a semantic analysis of the identified voice signal to obtain a semantic identification result; performing matching between the semantic identification result and a prestored evaluation semantic to acquire a volume adjustment rule; and automatically adjusting a microphone gain of the first electronic device according to the volume adjustment rule, wherein the voice signal comprises a voice signal from a second electronic device received by the first electronic device.

With reference to the first aspect, the prestored evaluation semantic is an evaluation that a call party at the second electronic device considers voice too small, and a corresponding volume adjustment rule is increasing a microphone gain of the first electronic device so as to increase the microphone volume; or the prestored evaluation semantic is an evaluation that a call party at the second electronic device considers voice too loud, and a corresponding volume adjustment rule is decreasing a microphone gain of the first electronic device so as to lower the microphone volume.

According to a second aspect, an embodiment of the present invention provides an electronic device, where the electronic device includes a processor, a memory, and a receiver, where the processor is connected to the memory and the receiver, and the electronic device is a first electronic device, where the receiver is configured to receive a voice signal after the electronic device establishes a call connection; the processor is configured to perform identification on the voice signal received by the receiver and perform a semantic analysis of the identified voice signal to obtain a semantic identification result, perform matching between the semantic identification result and a prestored evaluation semantic to acquire a volume adjustment rule, and automatically adjust a microphone gain of the first electronic device according to the volume adjustment rule; and the memory is configured to store the evaluation semantic, wherein the receiver comprises a wireless transceiver; and the voice signal is a voice signal from a second electronic device received by the first electronic device by using the wireless transceiver.

With reference to the second aspect, the prestored evaluation semantic is an evaluation that a call party at the second electronic device considers voice too small, and a corresponding volume adjustment rule is increasing the microphone gain of the first electronic device so as to increase the microphone volume; or the prestored evaluation semantic is an evaluation that a call party at the second electronic device considers voice too loud, and a corresponding volume adjustment rule is decreasing the microphone gain of the first electronic device so as to lower the microphone volume.

Embodiments of the present invention provide an automatic volume adjustment method and an electronic device. A voice signal is received, identification is performed and a semantic analysis is performed to obtain a semantic identification result, matching is performed between the semantic identification result and a prestored evaluation semantic to acquire a volume adjustment rule, and a volume output mode at an electronic device end is automatically adjusted according to the volume adjustment rule. By using the foregoing manner, a volume adjustment can be automatically performed based on the semantic identification result of the voice signal, without requiring manual intervention, which avoids impact on a call process and improves call experience of a call party.

### BRIEF DESCRIPTION OF DRAWINGS

FIG. 1 is a flowchart of an automatic volume adjustment method according to an embodiment of the present invention;
FIG. 2 is a schematic structural diagram of a first type of volume adjustment apparatus according to an embodiment; and
FIG. 3 is a schematic structural diagram of a first type of electronic device according to an embodiment of the present invention.

### DESCRIPTION OF EMBODIMENTS

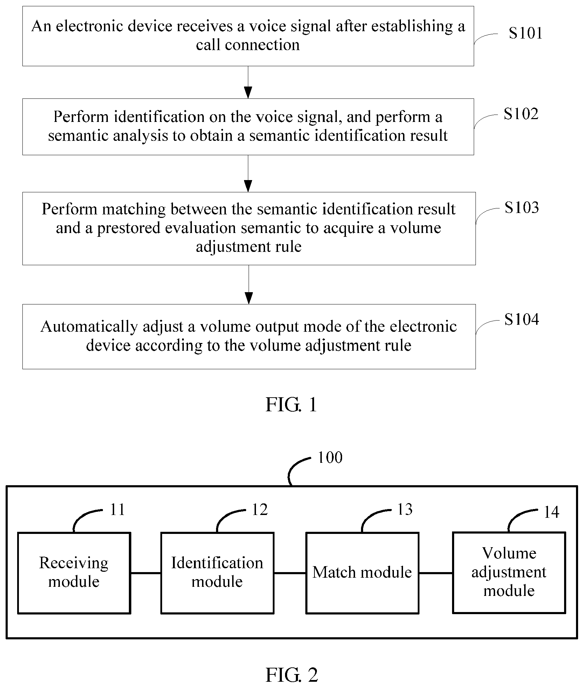

With reference to FIG. 1, FIG. 1 is a flowchart of an automatic volume adjustment method according to an embodiment of the present invention. In this embodiment, description is performed in a perspective of an electronic device. The automatic volume adjustment method in this embodiment includes the following steps:
S101: The electronic device receives a voice signal after establishing a call connection.

The electronic device receives the voice signal after the electronic device establishes a call with another electronic device. For ease of description, in this embodiment of the present invention, the electronic device is defined as a first electronic device, and the another electronic device that establishes the call with the electronic device is defined as a second electronic device. The voice signal herein may be a voice signal received by the electronic device by using a microphone, or may be a voice signal received by the electronic device and sent by the second electronic device.

S102: Perform identification on the voice signal, and perform a semantic analysis to obtain a semantic identification result.

Voice identification is performed on the received voice signal to obtain a voice identification result, and a semantic analysis is further performed on the voice identification result to obtain the semantic identification result. The semantic analysis refers to extracting a keyword from the voice identification result, and performing an analysis and an understanding to obtain a meaning that a user expects to convey, so as to provide the semantic identification result. For example, if the voice signal received from a first electronic device end is "ah, how come the voice is so small", the voice identification result is "ah, how come the voice is so small". The semantic analysis refers to extracting keywords such as "voice" and "small" from "ah, how come the voice is so small", and performing an analysis and an understanding to obtain the semantic identification result, which may be "voice being too small". The semantic analysis may be performed according to a preset rule. For example, as long as the extracted keywords include "voice" and "small", it is considered that the semantic identification result is "voice being too small"; or as long as the extracted keywords include "loud" and "voice", it is considered that the semantic identification result is "voice being too loud".

S103: Perform matching between the semantic identification result and a prestored evaluation semantic to acquire a volume adjustment rule.

When the semantic identification result is obtained by means of semantic identification, matching is performed between the semantic identification result and the prestored evaluation semantic, where the evaluation semantic is prestored and is used to perform an evaluation on volume. Each prestored evaluation semantic corresponds to one volume adjustment rule. When the semantic identification result successfully matches the prestored evaluation semantic, the volume adjustment rule corresponding to the matched prestored evaluation semantic is acquired.

When the voice signal is the voice signal received by the first electronic device by using the microphone, a correspondence between a prestored evaluation semantic and a volume adjustment rule is shown in Table 1.

**Table 1: Correspondence between a prestored evaluation semantic and a volume adjustment rule**

| **Prestored evaluation semantic** | **Volume adjustment rule** |
|---|---|
| Voice being too small | Turning up earpiece volume of an electronic device |
| Voice being too loud | Turning down earpiece volume of an electronic device |
| Being in a noisy environment | Switching earpiece output to speaker output |

The foregoing correspondence between an evaluation semantic and a volume adjustment rule may be prestored in a database. For ease of differentiation, herein, the foregoing correspondence between an evaluation semantic and a volume adjustment rule may be prestored in a database 1. That is, as long as the received voice signal is the voice signal originated from the first electronic device end, when the semantic identification result is obtained by performing identification on the voice signal and performing the semantic analysis, matching is performed between the semantic identification result and the evaluation semantic in the database 1.

When the voice signal is the voice signal received by the first electronic device and sent by the second electronic device, a correspondence between a prestored evaluation semantic and a volume adjustment rule is shown in Table 2.

**Table 2: Another correspondence between a prestored evaluation semantic and a volume adjustment rule**

| **Prestored evaluation semantic** | **Volume adjustment rule** |
|---|---|
| Voice being too small | Increasing a microphone gain of an electronic device |
| Voice being too loud | Decreasing a microphone gain of an electronic device |

The foregoing correspondence between an evaluation semantic and a volume adjustment rule may be prestored in a database. For ease of differentiation, herein, the foregoing correspondence between an evaluation semantic and a volume adjustment rule may be prestored in a database 2. That is, as long as the received voice signal is the voice signal originated from a second electronic device end, when the semantic identification result is obtained by performing identification on the voice signal and performing the semantic analysis, matching is performed between the semantic identification result and the evaluation semantic in the database 2.

The correspondences between a prestored evaluation semantic and a volume adjustment rule in the foregoing two application scenarios are separately described and saved for ease of differentiation. Actually, the correspondences between a prestored evaluation semantic and a volume adjustment rule for the foregoing two application scenarios may also be stored in a same database. When matching is performed, if the matching is unsuccessful, a volume adjustment action is not performed.

Certainly, the foregoing correspondences between an evaluation semantic and a volume adjustment rule are merely examples. In a case in which an objective of the present invention can be implemented, another correspondence may also be used, which may be determined voluntarily according to a requirement of a user, and is not limited in the present invention.

S104: Automatically adjust a volume output mode of the electronic device according to the volume adjustment rule.

The volume output mode of the electronic device is adjusted according to the volume adjustment rule. It should be noted that, when volume is specifically adjusted, amplitude of the volume adjustment may be adjusted according to a preset adjustment threshold. For example, when the semantic expresses voice being too small, earpiece volume of the electronic device is automatically turned up by one threshold; when the semantic expresses voice being too loud, the earpiece volume of the electronic device is automatically turned down by one threshold. This threshold is a value preset according to experience, which, for example, may be one bar, two bars, three bars, or the like. That is, when the threshold is set to one bar, each time volume is turned up or down according to a volume adjustment rule, current earpiece volume is turned up or down by one bar. Certainly, a user may also voluntarily set an adjustment threshold according to the user's own requirement, which is not limited in the present invention.

According to descriptions in the foregoing embodiment, it may be understood that, by using the automatic volume adjustment method provided in this embodiment of the present invention, a voice signal is received, identification is performed and a semantic analysis is performed to obtain a semantic identification result, matching is performed between the semantic identification result and a prestored evaluation semantic to acquire a volume adjustment rule, and a volume output mode of an electronic device end is automatically adjusted according to the volume adjustment rule. By using the foregoing manner, a corresponding volume adjustment can be automatically performed based on the semantic identification result of the voice signal, without requiring manual intervention, which avoids impact on a call process and improves call experience of a call party.

In the following, a specific embodiment is used to describe the automatic volume adjustment method of the present invention in detail. For example, A and B use mobile phones to make a call, where a mobile phone at an end of A is the foregoing first electronic device. After the call is connected, assuming that A says "how come your voice is so small", the mobile phone at the end of A obtains a semantic identification result "voice being too small" after voice and semantic analyses. According to the correspondence between an evaluation semantic and a volume adjustment rule in the foregoing scenario in which the voice signal originates from the first electronic device, a matched corresponding volume adjustment rule is turning up earpiece volume of the first electronic device, that is, turning up earpiece volume of the mobile phone at the end of A. At this time, the mobile phone at the end of A automatically turns up the earpiece volume, so that A can hear clearly a voice transmitted by using a mobile phone at an end of B. However, if A says "here is noisy", the mobile phone at the end of A obtains a semantic identification result "environment being noisy" after voice and semantic analyses. According to the correspondence between an evaluation semantic and a volume adjustment rule in the foregoing scenario in which the voice signal originates from the first electronic device, a matched corresponding volume adjustment rule is switching earpiece output of the first electronic device to speaker output, that is, switching an earpiece output mode of the mobile phone at the end of A to a speaker output mode. Assuming that B says "ah, how come the voice is so small", the mobile phone at the end of A obtains a semantic identification result "voice being too small" after voice and semantic analyses. According to the correspondence between an evaluation semantic and a volume adjustment rule in the foregoing scenario in which the voice signal originates from the second electronic device, a matched corresponding volume adjustment rule is increasing a microphone gain of the first electronic device, so that the voice of A is turned up and then transmitted to the mobile phone at the end of B. Other scenarios are analogized, which are not described one by one by using examples in the present invention.

With reference to FIG. 2, FIG. 2 is a schematic structural diagram of a first type of volume adjustment apparatus according to an embodiment. A volume adjustment apparatus 100 in this embodiment includes a receiving module 11, an identification module 12, a match module 13, and a volume adjustment module 14. The volume adjustment apparatus in this embodiment is a first volume adjustment apparatus.

The receiving module 11 is configured to receive a voice signal after an electronic device establishes a call connection.

The receiving module 11 receives the voice signal after the electronic device establishes a call connection with another electronic device. For ease of description, in this embodiment, the electronic device is defined as a first electronic device, and the another electronic device that establishes a call with the first electronic device is defined as a second electronic device. The volume adjustment apparatus 100 in this embodiment is applied to the first electronic device. The voice signal herein may be a voice signal received by the first electronic device by using a microphone, or may be a voice signal received by the first electronic device and sent by the second electronic device.

The identification module 12 is configured to perform identification on the voice signal received by the receiving module 11, and perform a semantic analysis to obtain a semantic identification result.

The identification module 12 performs voice identification on the received voice signal to obtain a voice identification result, and further performs a semantic analysis on the voice identification result to obtain a semantic identification result. The semantic analysis refers to extracting a keyword from the voice identification result, and performing an analysis and an understanding to obtain a meaning that a user expects to convey, so as to provide the semantic identification result. For example, if a call party at a first electronic device end says "here is noisy", the voice identification result obtained after the voice identification is "here is noisy", and the semantic identification result obtained after the semantic analysis is further performed may be "environment being noisy".

The match module 13 is configured to perform matching between the voice identification result obtained by the identification module 12 by means of identification and a prestored evaluation semantic to acquire a volume adjustment rule.

When the semantic identification result is obtained by means of semantic identification, matching is performed between the semantic identification result and the prestored evaluation semantic, where the evaluation semantic is prestored and is used to perform an evaluation on volume. Each prestored evaluation semantic corresponds to one volume adjustment rule. When the semantic identification result successfully matches the prestored evaluation semantic, the volume adjustment rule corresponding to the matched prestored evaluation semantic is acquired.

In the two different application scenarios in which the voice signal originates from the first electronic device or originates from the second electronic device, for a correspondence between an evaluation semantic and a volume adjustment rule, refer to detailed descriptions in the foregoing embodiment, which is not described herein again.

The volume adjustment module 14 is configured to automatically adjust a volume output module of the electronic device according to the volume adjustment rule acquired by the match module 13.

The volume output mode of the electronic device is adjusted according to the volume adjustment rule. It should be noted that, when volume is specifically adjusted, amplitude of the volume adjustment may be adjusted according to a preset adjustment threshold. For example, when the semantic expresses voice being too small, earpiece volume of the electronic device is automatically turned up by one threshold; when the semantic expresses voice being too loud, the earpiece volume of the electronic device is automatically turned down by one threshold. This threshold is a value preset according to experience, which, for example, may be one bar, two bars, three bars, or the like. That is, when the threshold is set to one bar, each time volume is turned up or down according to a volume adjustment rule, current earpiece volume is turned up or down by one bar. Certainly, a user may also voluntarily set an adjustment threshold according to the user's own requirement, which is not limited in the present invention.

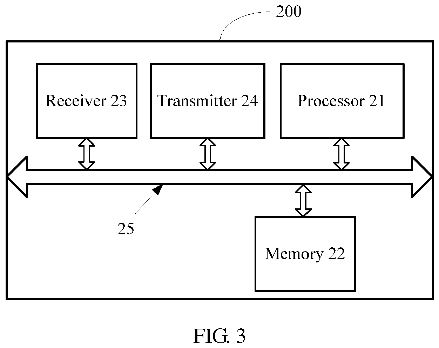

With reference to FIG. 3, FIG. 3 is a schematic structural diagram of a first type of electronic device according to an embodiment of the present invention. An electronic device 200 in this embodiment includes a processor 21, a memory 22, a receiver 23, a transmitter 24, and a bus system 25. The electronic device is this embodiment is a first electronic device.

The processor 21 controls an operation of the electronic device 200, and the processor 21 may further be referred to as a CPU (Central Processing Unit, central processing unit). The processor 21 may be an integrated circuit chip and has a signal processing capability. The processor 21 may further be a general purpose processor, a digital signal processor (DSP, Digital Signal Processing), an application-specific integrated circuit (ASIC, Application Specific Integrated Circuit), a field programmable gate array (FPGA, Field-Programmable Gate Array), or another programmable logical device, a discrete gate or a transistor logical device, or a discrete hardware component. The general purpose processor may be a microprocessor, or the processor may also be any conventional processor or the like.

The memory 22 may include a read-only memory and a random access memory, and provides an instruction and data for the processor 21. A part of the memory 22 may further include a nonvolatile random access memory (NVRAM).

Components of the electronic device 200 are coupled together by using the bus system 25, where the bus system 25 includes a data bus, and may further include a power bus, a control bus, a state signal bus, and the like. The bus system may be an ISA (Industry Standard Architecture, industry standard architecture) bus, a PCI (Peripheral Component Interconnect, peripheral component interconnect) bus, an EISA (Extended Industry Standard Architecture, Extended Industry Standard Architecture) bus, or the like. The bus may be one or more physical lines. In a case with multiple physical lines, the bus may be categorized into an address bus, a data bus, a control bus, and so on. In some other embodiments of the present invention, the processor 21, the memory 22, the receiver 23, and the transmitter 24 may also be directly connected by using a communication line. However, for clarity of description, various buses are marked as the bus system 25 in the diagram.

The memory 22 stores the following elements: an executable module or data structure, a subset of the executable module or data structure, or an extended set of the executable module or data structure.

An operation instruction includes various operation instructions, which are used to implement various operations.

An operating system includes various system programs, which are used to implement various basic services and process hardware-based tasks.

In this embodiment of the present invention, the processor 21 calls an operation instruction stored in the memory 22 (the operation instruction may be stored in the operating system).

The receiver 23 is configured to receive a voice signal after a call connection is established.

The processor 21 controls the receiver 23 to receive the voice signal after the first electronic device establishes a call with another electronic device. For ease of description, in this embodiment of the present invention, the electronic device is defined as the first electronic device, and the another electronic device that establishes the call with the first electronic device is defined as a second electronic device.

In specific implementation, the receiver 23 may be a microphone, or may be a wireless receiver. When the receiver 23 is a microphone, the voice signal herein is a voice signal received by the first electronic device by using the microphone; when the receiver 23 is a wireless receiver, the voice signal is a voice signal received by the first electronic device and sent by the second electronic device, and is played by using an earpiece of the first electronic device.

The processor 21 performs voice identification on the voice signal received by the receiver 23 and performs a semantic analysis to obtain a semantic identification result, performs matching between the semantic identification result and a prestored evaluation semantic to acquire a volume adjustment rule, and automatically adjusts a volume output mode of the electronic device according to the volume adjustment rule.

The processor 21 performs voice identification on the voice signal received by the receiver 23 to obtain a voice identification result, and further performs a semantic analysis on the voice identification result to obtain the semantic identification result. The semantic analysis refers to extracting a keyword from the voice identification result, and performing an analysis and an understanding to obtain a meaning that a user expects to convey, so as to provide the semantic identification result. For example, if the voice signal received from a first electronic device end is "ah, how come the voice is so small", the voice identification result is "ah, how come the voice is so small". The semantic analysis refers to extracting keywords such as "voice" and "small" from "ah, how come the voice is so small", and performing an analysis and an understanding to obtain the semantic identification result, which may be "voice being too small". The semantic analysis may be performed according to a preset rule. For example, as long as the extracted keywords include "voice" and "small", it is considered that the semantic identification result is "voice being too small"; or as long as the extracted keywords include "loud" and "voice", it is considered that the semantic identification result is "voice being too loud".

When the semantic identification result is obtained by means of semantic identification, the processor 21 performs matching between the semantic identification result and the prestored evaluation semantic, where the evaluation semantic is prestored and is used to perform an evaluation on volume. Each prestored evaluation semantic corresponds to one volume adjustment rule.

When the semantic identification result matches the prestored evaluation semantic, the volume adjustment rule corresponding to the prestored evaluation semantic is acquired, and the processor 21 adjusts the volume output mode of the electronic device according to the volume adjustment rule.

When the voice signal is the voice signal received by the first electronic device by using the microphone, refer to Table 1 for a correspondence between a prestored evaluation semantic and a volume adjustment rule; when the voice signal is the voice signal received by the first electronic device and sent by the second electronic device, refer to Table 2 for a correspondence between a prestored evaluation semantic and a volume adjustment rule.

For ease of differentiation, the correspondences between a prestored evaluation semantic and a volume adjustment rule in the two application scenarios are separately stored in different databases correspondingly. Certainly, the correspondences may also be stored in a same database. When matching is performed, if the matching is unsuccessful, a volume adjustment action is not performed.

Certainly, the foregoing correspondences between an evaluation semantic and a volume adjustment rule are merely examples. In a case in which an objective of the present invention can be implemented, another correspondence may also be used, which may be determined voluntarily according to a requirement of a user, and is not limited in the present invention.

The memory 22 is configured to store an evaluation semantic.

The transmitter 24 is configured to send data externally.

The method disclosed in the foregoing embodiment of the present invention may be applied to the processor 21, or implemented by the processor 21. In an implementation process, steps of the foregoing method may be completed by using an integrated logical circuit of hardware of the processor 21 or an instruction in a form of software. Methods, steps, and logical block diagrams disclosed in the embodiments of the present invention may be implemented or executed. The steps of the methods disclosed in the embodiments of the present invention may be directly executed by a hardware decoding processor, or executed by a combination of hardware and a software module in a decoding processor. The software module may be located in a mature storage medium in the art, such as a random access memory, a flash memory, a read-only memory, a programmable read-only memory or an electrically erasable programmable memory, or a register. The storage medium is located in the memory 22. The processor 21 reads information from the memory 22, and completes the steps of the foregoing method in combination with the hardware of the processor 21.

According to descriptions in the foregoing embodiments, by using the automatic volume adjustment method and the electronic device provided in the embodiments of the present invention, a voice signal is received, identification is performed and a semantic analysis is performed to obtain a semantic identification result, matching is performed between the semantic identification result and a prestored evaluation semantic to acquire a volume adjustment rule, and a volume output mode of an electronic device end is automatically adjusted according to the volume adjustment rule. By using the foregoing manner, a volume adjustment can be automatically performed based on the semantic identification result of the voice signal, without requiring manual intervention, which avoids impact on a call process and improves call experience of a call party.

In the several embodiments provided in the present invention, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. An automatic volume adjustment method to be carried out on an electronic device (200), wherein the electronic device comprises a processor (21), a memory (22), and a receiver (23), wherein the processor (21) is connected to the memory (22) and the receiver (23), and the electronic device is a first electronic device, wherein the method comprises:
receiving (S101), by the receiver, a voice signal after a call connection with a second electronic device is established by the first electronic device;
performing (S102), by the processor, identification on the voice signal, and performing a semantic analysis of the identified voice signal to obtain a semantic identification result;
performing (SI03), by the processor, matching between the semantic identification result and a prestored evaluation semantic to acquire a volume adjustment rule, wherein the prestored evaluation semantic is retrieved from the memory; and
adjusting (SI04), by the processor, a microphone gain of the first electronic device according to the volume adjustment rule;
wherein the receiver comprises a wireless transceiver; and
wherein the voice signal comprises a voice signal from the second electronic device received by the first electronic device by using the wireless transceiver.

2. The method according to claim 1, wherein the prestored evaluation semantic is an evaluation that a call party at the second electronic device considers voice too small, and a corresponding volume adjustment rule is increasing a microphone gain of the first electronic device so as to increase the microphone volume; or
the prestored evaluation semantic is an evaluation that a call party at the second electronic device considers voice too loud, and a corresponding volume adjustment rule is decreasing a microphone gain of the first electronic device so as to lower the microphone volume.

3. An electronic device (200), wherein the electronic device comprises a processor (21), a memory (22), and a receiver (23), wherein the processor (21) is connected to the memory (22) and the receiver (23), and the electronic device (200) is a first electronic device, wherein
the receiver (23) is configured to receive a voice signal after the electronic device (200) establishes a call connection;
the processor (21) is configured to:
perform identification on the voice signal received by the receiver (23) and perform a semantic analysis of the identified voice signal to obtain a semantic identification result,
perform matching between the semantic identification result and a prestored evaluation semantic to acquire a volume adjustment rule, and
adjust a microphone gain of the first electronic device (200) according to the volume adjustment rule; and
the memory (22) is configured to store the evaluation semantic,
wherein the receiver (23) comprises a wireless transceiver; and
the voice signal is a voice signal from a second electronic device received by the first electronic device (200) by using the wireless transceiver.

4. The electronic device (200) according to claim 3, wherein the prestored evaluation semantic is an evaluation that a call party at the second electronic device considers voice too small, and a corresponding volume adjustment rule is increasing the microphone gain of the first electronic device (200) so as to increase the microphone volume; or
the prestored evaluation semantic is an evaluation that a call party at the second electronic device considers voice too loud, and a corresponding volume adjustment rule is decreasing the microphone gain of the first electronic device (200) so as to lower the microphone volume.

## Patentansprüche

1. Verfahren zur automatischen Lautstärkenanpassung, das an einer elektronischen Vorrichtung (200) ausgeführt werden soll, wobei die elektronische Vorrichtung einen Prozessor (21), einen Speicher (22) und einen Empfänger (23) umfasst, wobei der Prozessor (21) mit dem Speicher (22) und dem Empfänger (23) verbunden ist und die elektronische Vorrichtung eine erste elektronische Vorrichtung ist, wobei das Verfahren umfasst:
Empfangen (S101), durch den Empfänger, eines Sprachsignals, nachdem eine Anrufverbindung mit einer zweiten elektronischen Vorrichtung durch die erste elektronische Vorrichtung hergestellt wird;
Durchführen (S102), durch den Prozessor, einer Identifizierung an dem Sprachsignal und Durchführen einer semantischen Analyse des identifizierten Sprachsignals, um ein semantisches Identifikationsergebnis zu erhalten;
Durchführen (S103), durch den Prozessor, eines Abgleichs zwischen dem semantischen Identifikationsergebnis und einer vorgespeicherten Bewertungssemantik, um eine Lautstärkenanpassungsregel zu erfassen, wobei die vorgespeicherte Bewertungssemantik aus dem Speicher abgerufen wird; und
Anpassen (S104), durch den Prozessor, einer Mikrofonverstärkung der ersten elektronischen Vorrichtung gemäß der Lautstärkenanpassungsregel;
wobei der Empfänger einen drahtlosen Transceiver umfasst; und
wobei das Sprachsignal ein Sprachsignal von der zweiten elektronischen Vorrichtung umfasst, das von der ersten elektronischen Vorrichtung unter Verwendung des drahtlosen Transceivers empfangen wird.

2. Verfahren nach Anspruch 1, wobei die vorgespeicherte Bewertungssemantik eine Bewertung ist, dass ein Anrufteilnehmer an der zweiten elektronischen Vorrichtung die Stimme als zu leise betrachtet, und eine entsprechende Lautstärkenanpassungsregel eine Mikrofonverstärkung der ersten elektronischen Vorrichtung erhöht, um die Mikrofonlautstärke zu erhöhen; oder
die vorgespeicherte Bewertungssemantik eine Bewertung ist, dass ein Anrufteilnehmer an der zweiten elektronischen Vorrichtung die Stimme als zu laut betrachtet, und eine entsprechende Lautstärkenanpassungsregel eine Mikrofonverstärkung der ersten elektronischen Vorrichtung verringert, um die Mikrofonlautstärke zu verringern.

3. Elektronische Vorrichtung (200), wobei die elektronische Vorrichtung einen Prozessor (21), einen Speicher (22) und einen Empfänger (23) umfasst, wobei der Prozessor (21) mit dem Speicher (22) und dem Empfänger (23) verbunden ist und die elektronische Vorrichtung (200) eine erste elektronische Vorrichtung ist, wobei der Empfänger (23) konfiguriert ist, um ein Sprachsignal zu empfangen, nachdem die elektronische Vorrichtung (200) eine Anrufverbindung hergestellt hat;
der Prozessor (21) konfiguriert ist, um:
eine Identifizierung an dem von dem Empfänger (23) empfangenen Sprachsignal durchzuführen und eine semantische Analyse des identifizierten Sprachsignals durchzuführen, um ein semantisches Identifikationsergebnis zu erhalten;
einen Abgleich zwischen dem semantischen Identifikationsergebnis und einer vorgespeicherten Bewertungssemantik durchzuführen, um eine Lautstärkenanpassungsregel zu erfassen, und
eine Mikrofonverstärkung der ersten elektronischen Vorrichtung (200) gemäß der Lautstärkenanpassungsregel anzupassen; und
der Speicher (22) konfiguriert ist, um die Bewertungssemantik zu speichern,
wobei der Empfänger (23) einen drahtlosen Transceiver umfasst; und
das Sprachsignal ein Sprachsignal von einer zweiten elektronischen Vorrichtung ist, das von der ersten elektronischen Vorrichtung (200) unter Verwendung des drahtlosen Transceivers empfangen wird.

4. Elektronische Vorrichtung (200) nach Anspruch 3, wobei die vorgespeicherte Bewertungssemantik eine Bewertung ist, dass ein Anrufteilnehmer an der zweiten elektronischen Vorrichtung die Stimme als zu leise betrachtet, und eine entsprechende Lautstärkenanpassungsregel die Mikrofonverstärkung der ersten elektronischen Vorrichtung (200) erhöht, um die Mikrofonlautstärke zu erhöhen; oder
die vorgespeicherte Bewertungssemantik eine Bewertung ist, dass ein Anrufteilnehmer an der zweiten elektronischen Vorrichtung die Stimme als zu laut betrachtet, und eine entsprechende Lautstärkenanpassungsregel die Mikrofonverstärkung der ersten elektronischen Vorrichtung (200) verringert, um die Mikrofonlautstärke zu verringern.

## Revendications

1. Procédé de réglage de volume automatique qui doit être réalisé sur un dispositif électronique (200), dans lequel le dispositif électronique comprend un processeur (21), une mémoire (22) et un récepteur (23), dans lequel le processeur (21) est raccordé à la mémoire (22) et au récepteur (23) et le dispositif électronique est un premier dispositif électronique, le procédé consistant :
à recevoir (S101), au moyen du récepteur, un signal vocal après qu'une connexion d'appel avec un second dispositif électronique est établie par le premier dispositif électronique ;
à effectuer (S102), au moyen du processeur, une identification sur le signal vocal et à effectuer une analyse sémantique du signal vocal identifié pour obtenir un résultat d'identification sémantique ;
à effectuer (S103), au moyen du processeur, une mise en correspondance entre le résultat d'identification sémantique et une sémantique d'évaluation préstockée pour acquérir une règle de réglage de volume, dans lequel la sémantique d'évaluation préstockée est extraite de la mémoire ; et
à régler (S104), au moyen du processeur, un gain de microphone du premier dispositif électronique en fonction de la règle de réglage de volume ;
dans lequel le récepteur comprend un émetteur-récepteur sans fil ; et
dans lequel le signal vocal comprend un signal vocal provenant du second dispositif électronique reçu par le premier dispositif électronique en utilisant l'émetteur-récepteur sans fil.

2. Procédé selon la revendication 1, dans lequel la sémantique d'évaluation préstockée est une évaluation du fait qu'un participant à un appel au niveau du second dispositif électronique considère que la voix est trop faible, et une règle de réglage de volume correspondante augmente un gain de microphone du premier dispositif électronique de sorte à augmenter le volume du microphone ; ou
la sémantique d'évaluation préstockée est une évaluation du fait qu'un participant à un appel au niveau du second dispositif électronique considère que la voix est trop forte, et une règle de réglage de volume correspondante réduit un gain de microphone du premier dispositif électronique de sorte à abaisser le volume du microphone.

3. Dispositif électronique (200), le dispositif électronique comprenant un processeur (21), une mémoire (22) et un récepteur (23), le processeur (21) étant raccordé à la mémoire (22) et au récepteur (23) et le dispositif électronique (200) étant un premier dispositif électronique, dans lequel
le récepteur (23) est configuré pour recevoir un signal vocal après que le dispositif électronique (200) établit une connexion d'appel ;
le processeur (21) est configuré :
pour effectuer une identification sur le signal vocal reçu par le récepteur (23) et pour effectuer une analyse sémantique du signal vocal identifié pour obtenir un résultat d'identification sémantique ;
pour effectuer une mise en correspondance entre le résultat d'identification sémantique et une sémantique d'évaluation préstockée pour acquérir une règle de réglage de volume et
pour régler un gain de microphone du premier dispositif électronique (200) en fonction de la règle de réglage de volume ; et
la mémoire (22) est configurée pour stocker la sémantique d'évaluation,
dans lequel le récepteur (23) comprend un émetteur-récepteur sans fil ; et
le signal vocal est un signal vocal provenant d'un second dispositif électronique reçu par le premier dispositif électronique (200) en utilisant l'émetteur-récepteur sans fil.

4. Dispositif électronique (200) selon la revendication 3, dans lequel la sémantique d'évaluation préstockée est une évaluation du fait qu'un participant à un appel au niveau du second dispositif électronique considère que la voix est trop faible, et une règle de réglage de volume correspondante augmente le gain de microphone du premier dispositif électronique (200) de sorte à augmenter le volume du microphone ; ou
la sémantique d'évaluation préstockée est une évaluation du fait qu'un participant à un appel au niveau du second dispositif électronique considère que la voix est trop forte, et une règle de réglage de volume correspondante réduit le gain de microphone du premier dispositif électronique (200) de sorte à abaisser le volume du microphone.
